# EUROPEAN PATENT APPLICATION

(11) **EP 4 679 457 A1**
(43) Date of publication of application: **14.01.2026**
(21) Application number: 24187110.2
(22) Date of filing: 08.07.2024
(51) Int. Cl.: G21K 1/00, G06N 10/40, H01J 37/30, H01J 37/32, C23F 4/00

(54) **DEVICE FOR TRAPPING IONS AND METHODS FOR FABRICATING SAME**

(71) Applicant: Infineon Technologies Austria AG, 9500 Villach (AT)
(72) Inventor: LAURENT, Fabian, 9500 Villach (AT); ZESAR, Alexander, 9500 Villach (AT); SCHEY, Simon Matthias, 9500 Villach (AT); AUCHTER, Silke Katharina, 9500 Villach (AT); DIETL, Matthias German, 9500 Villach (AT); LIPPS, Stefan, 93173 Wenzenbach (DE); UMMINGER, Jörg, 93437 Furth im Wald (DE)
(74) Representative: Infineon Patent Department

(57) **Abstract**

A method for fabricating a device for trapping ions comprises forming a first metal layer over a substrate. The first metal layer is made of a first material. The method further comprises forming a second metal layer over the first metal layer. The second metal layer is made of a second material being different from the first material. The method further comprises performing physical dry etching to form one or more first trenches in the second metal layer. The one or more first trenches extend to a lower side of the second metal layer. The method further comprises performing chemical dry etching to form one or more second trenches in the first metal layer below the one or more first trenches. The one or more second trenches extend to a lower side of the first metal layer.

## Description

### BACKGROUND

Due to an upscaling of ion traps for quantum computing and an optimization of ion traps for precision metrology, demands on the structural complexity of ion traps are increasing. To move forward with new generations of ion traps, new fabrication processes need to be developed for enhancing reliable and scalable microfabrication of ion traps.

### SUMMARY

A method for fabricating a device for trapping ions may comprise forming a first metal layer over a substrate. The first metal layer may be made of a first material. The method may further comprise forming a second metal layer over the first metal layer. The second metal layer may be made of a second material being different from the first material. The method may further comprise performing physical dry etching to form one or more first trenches in the second metal layer. The one or more first trenches may extend to a lower side of the second metal layer. The method may further comprise performing chemical dry etching to form one or more second trenches in the first metal layer below the one or more first trenches. The one or more second trenches may extend to a lower side of the first metal layer.

A device for trapping ions may comprise a plurality of electrode segments. The electrode segments may be configured to trap one or more ions. The plurality of electrode segments may each comprise at least a first metal layer and a second metal layer. The plurality of electrode segments may be separated from each other by one or more trenches. At least one of the one or more trenches may have a width that is equal to or less than 3 µm.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other and/or can be selectively omitted if not described to be necessarily required.
Fig. 1A illustrates a top view of a device for trapping ions according to one or more embodiments of the present disclosure.
Fig. 1B illustrates a cross section of a device for trapping ions according to one or more embodiments of the present disclosure.
Fig. 1C illustrates an enlarged view of a part of a cross section of a device for trapping ions illustrating a trench having a width according to one or more embodiments of the present disclosure.
Fig. 2A illustrates a top view of a device for trapping ions according to one or more embodiments of the present disclosure.
Fig. 2B illustrates a cross section of a device for trapping ions according to one or more embodiments of the present disclosure.
Fig. 2C illustrates an enlarged view of a part of cross section of a device for trapping ions illustrating a trench having a width according to one or more embodiments of the present disclosure.
Fig. 3A-3E illustrate several steps of an embodiment of manufacturing a device for trapping ions, such as the ones illustrated in Figs. 1A-1C and Figs. 2A-2C.
Fig. 3F illustrates an enlarged view of a part of a cross section of a device for trapping ions illustrating a trench having a width according to one or more embodiments of the present disclosure.
FIG. 4 illustrates a flow chart of an embodiment of manufacturing a device for trapping ions according to embodiments of the present disclosure, such as the ones illustrated in Figs. 1A-1C, and 2A-2C and as illustrated in Figs. 3A-3F.

### DETAILED DESCRIPTION

In the following detailed description, reference is made to the accompanying drawings, which form a part hereof, and in which is shown by way of illustration specific embodiments in which the invention may be practiced. In this regard, directional terminology, such as "top", "bottom", "front", "back", "leading", "trailing", etc., is used with reference to the orientation of the figure(s) being described. Because components of the embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, thereof, is not to be taken in a limiting sense, and the scope of the present invention is defined by the appended claims.

A number of exemplary embodiments will be explained below. In this case, identical structural features are identified by identical or similar reference symbols in the figures. In the context of the present description, "lateral" or "lateral direction" should be understood to mean a direction or extent that runs generally parallel to the lateral extent of a substrate or a layer (such as a metal layer or a dielectric layer). The lateral direction thus extends generally parallel to these surfaces or sides. In contrast thereto, the term "vertical" or "vertical direction" is understood to mean a direction that runs generally perpendicular to these surfaces or sides and thus to the lateral direction. The vertical direction therefore runs in the thickness direction of the substrate or the layer (such as a metal layer or a dielectric layer).

As employed in this specification, when an element such as a layer, region or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present.

As employed in this specification, when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Some embodiments are described next with reference to the Figures. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

The following description relates to devices for trapping ions (also called ion trap devices) and methods for manufacturing same. The ion trap devices described herein may be configured to trap ions and to control the trapped ions (e.g., to move them in one or more directions). It is to be noted that the following description is not restricted to ions, but may also be applied to atoms, molecules or other quantum particles/systems (e.g. electrons).

In some examples, the ion trap devices described herein may be used for quantum computing, but are not restricted thereto. Trapped ions are one of the most promising candidates for being used as qubits in quantum computers, since they can be trapped with rather long lifetimes by means of electromagnetic fields. In this context, each ion may represent a physical qubit. However, ion trap devices in accordance with the disclosure are not restricted to the application of quantum computing. The ion trap devices presented herein may also be used for other applications, such as e.g. atomic clocks.

As the number of ions increases, the requirements for device control and interference (e.g., crosstalk) suppression may increase as well. The surface of electrode segments of the ion trap may play an important role in this regard. In examples, the electrode segments may have high electrical conductivity, e.g., to handle high capacitive charging currents. It is also desirable that surface impurities and light scattering from the surface of the electrode segments can be kept low. In addition, the surface of the electrode segments can cause unwanted heating of the ions, which should be minimized.

One example, to minimize surface impurities of electrode segments of ion traps is to use metals with a rather high work function as a top material in an electrode segment of an ion trap. The work function of a material may refer to a minimum energy needed to remove an electron from a surface made of the material to a point in vacuum outside the surface. For example, at least one of Ni, Au, Pt, Pd, Ru, Rh, Pd, Ag, Os, and Ir may be used as a top material for an electrode segment of an ion trap. In particular, Au, Pt and Pd may be used as a top material for an electrode segment of an ion trap. However, none of these materials can be etched with chemical dry etching (such as plasma etching) at least not for practical applications. This is because, there is currently no suitable etch chemistry available for chemical dry etching one of Ni, Au, Pt, Pd, Ru, Rh, Pd, Ad, Os, and Ir. As a result, it is presently difficult to fabricate micro-structured electrode segments of an ion trap that comprise at least one of Ni, Au, Pt, Pd, Ru, Rh, Pd, Ad, Os, and Ir as their surface material with a width of the electrode segments and/or a width of trenches between electrode segments that is smaller than 3 µm. The present disclosure may provide a manufacturing method and an ion trap device that allows for having both a surface of an electrode segment that comprises a top layer of a material of at least one of Ni, Au, Pt, Pd, Ru, Rh, Pd, Ad, Os, and Ir, and a width of the electrode segments and/or a width of trenches between electrode segments being smaller than 3 µm.

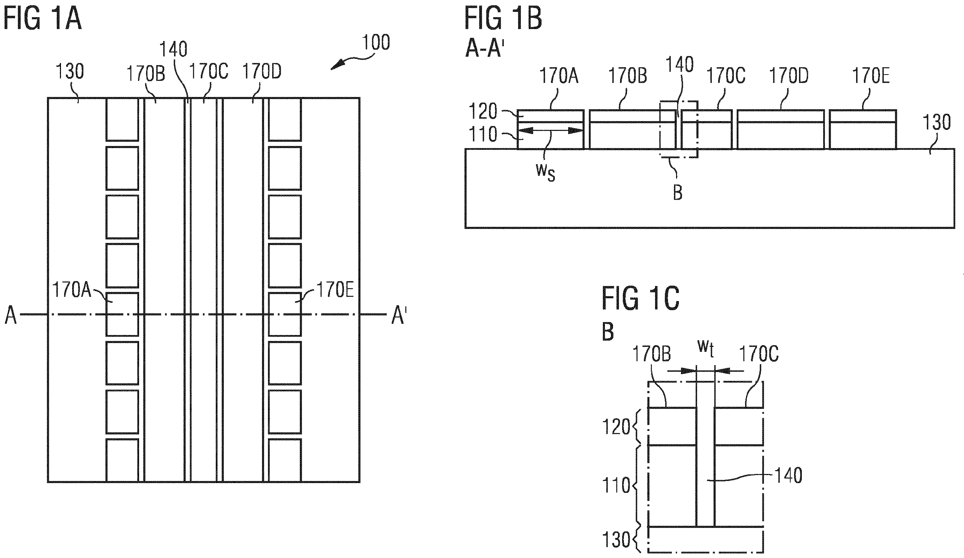

Referring now to Fig. 1A that illustrates a top view of a device 100 for trapping ions according to one or more embodiments of the present disclosure, to Fig. 1B that illustrates a cross section of a device 100 for trapping ions according to one or more embodiments of the present disclosure (such as a cross section along the line A-A' indicated in Fig. 1A), and to Fig. 1C that illustrates an enlarged view of a cross section of a device 100 for trapping ions illustrating a trench 140 having a width wₜ according to one or more embodiments of the present disclosure (such as the region B illustrated with a dashed box in Fig. 1B). According to Figs. 1A-1C, a device 100 for trapping ions comprises a plurality of electrode segments 170A-E. The electrode segments 170A-E may be configured to trap one or more ions at a position over the electrode segments 170A-E. In addition, the electrode segments 170A-E may be configured to control one or more ions (such as to move them from one position over the electrode segments 170A-E to another position over the electrode segments 170A-E). The plurality of electrode segments 170A-E may each comprise at least a first metal layer 110 and a second metal layer 120. The plurality of electrode segments 170A-E may be separated from each other by one or more trenches 140. At least one of the one or more trenches 140 may have a width wₜ that is equal to or less than 3µm or equal to or less than 2µm (like 1µm or 0.5µm for example). In addition or as an alternative, at least one electrode segment of the plurality of electrode segments 170A-E may comprises a width wₛ that is equal to or smaller than 3µm. The ion trap device 100 may further include a substrate 130 on which the electrode segments 170A-E may be arranged.

First metal layer 110 may be arranged on substrate 130. In some examples, one or more first intervening layers, such as a first adhesion layer and/or a first barrier layer may be arranged between the substrate 130 and the first metal layer 110. In embodiments, the first metal layer may be made of a first material that may have an electrical conductivity of more than 10⁷ S/m. The first metal layer 110 may be made of a first material that comprises at least one of Al, Cu, AlCu, and AlSiCu, for example. Of course, other suitable materials (such as Nb, Ta or YBCO) for the first metal layer 110 are possible and contemplated by the present disclosure. In some examples the first metal layer 110 may have a thickness that is in a range between 0.5µm and 10µm (or up to 20µm) or between 1µm and 5 µm (such as 2µm, for example). The one or more first intervening layers may have a rather thin thickness (as compared to the first metal layer 110) of 100nm or less. In some examples, the first barrier layer may comprise at least one of TiN, TiW, and W. The first adhesion layer may comprise Ti.

Second metal layer 120 may be arranged on (or over) the first metal layer 110. In some examples, one or more second intervening layers, such as a second adhesion layer and/or a second barrier layer may be arranged between the first metal layer 110 and the second metal layer 120. The second metal layer 120 may be made of a second material that is different from the first material of the first metal layer 110. The second metal layer 120 may be made of a second material that comprises at least one of Ni, Au, Pt, Pd, Ru, Rh, Pd, Ag, Os, and Ir (and in particular, Au, Pt and Pd). In some examples, the second metal layer 120 may have a thickness that is in a range between 10nm 15nm and 750 nm or between 20nm and 500nm (such as 200nm, for example). The one or more second intervening layers may have a thinner thickness as compared to the second metal layer 110. In some examples, the second barrier layer may comprise at least one of TiN, TiW, and W. The second adhesion layer may comprise Ti.

In some examples, the second metal layer 120 may comprise more than one metal layer (such as a plurality of metal layers). In this case, the plurality of metal layers of the second metal layer 120 each may be made of a different one of the second materials discussed above. For example, the second metal layer 120 may comprise two metal layers (one metal layer made of Au having a thickness of 100nm and one metal layer made of Pt having a thickness of 100nm). Other combinations where the second metal layer 130 comprises two or more metal layers of the second material with other thickness are of course also possible and contemplated by the present disclosure.

First metal layer 110 and second metal layer 120 may be structured metal layers. According to embodiments, one or more trenches 140 are formed in the first metal layer 110 and the second metal layer 120 that extend from an upper side of second metal layer 120 to a lower side of first metal layer 110. The one or more trenches may physically and/or electrically separate the first metal layer 110 and the second metal layer 120 into one or more segments 170A-E. The one or more segments 170A-E may each comprise a part of the first metal layer 110 and a part of the second metal layer 120. The second metal layer 120 may be the top layer of the one or more segments 170A-E.

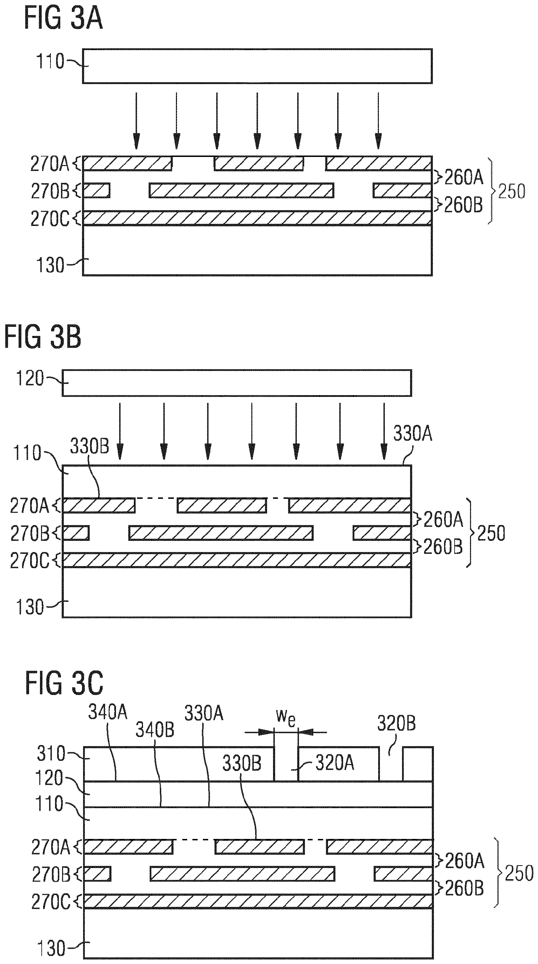

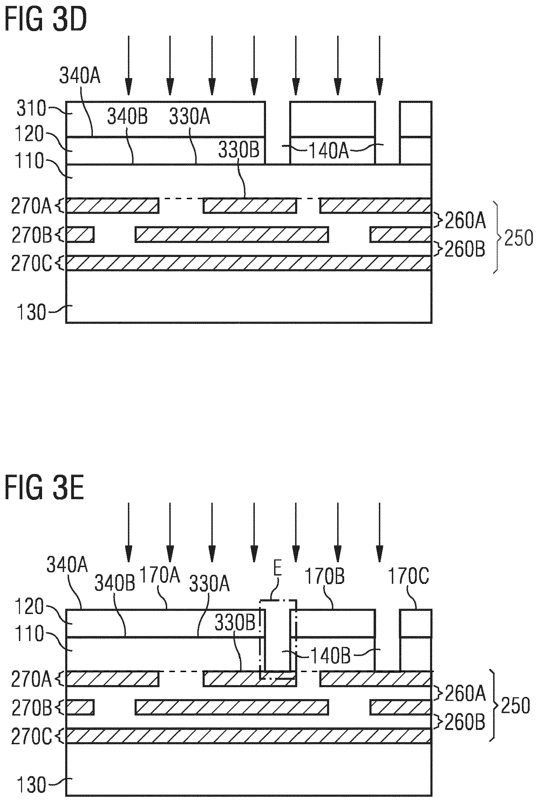

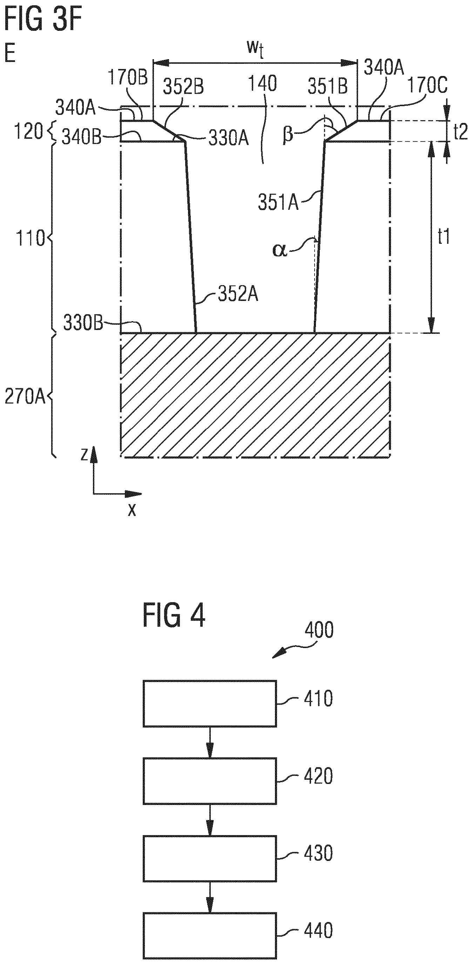

One or more trenches 140 may extend from an upper side of the second metal layer 120 to a lower side of the first metal layer 110. At least one of the one or more common trenches 140 has a width wₜ that is equal to or smaller than 3µm. The one or more common trenches 140 may separate the first metal layer 110 and the second metal layer 120 into one or more segments 170A-E. Each one of the one or more segments 170A-E may comprise a part of the first metal layer 110 and a part of the second metal layer 120. A method for manufacturing the one or more trenches 140 in the first metal layer 110 and the second metal layer 120 will be described further below with regard to Figs. 3A-3F and Fig. 4.

For example, second metal layer 120 may be etched via physical dry etching first, then first metal layer 110 is etched via chemical dry etching. The one or more trenches 140 may also extend through the first and second intervening layers referred to above (in case they are present). The one or more trenches 140 may extend through the first metal layer 110 and the second metal layer 120 at the same lateral positions. In other words, the one or more trenches 140 may be common trenches for the first metal layer 110 and the second metal layer 120. In embodiments, a bottom of the one or more trenches is given by substrate 130 and sidewalls of the one or more trenches 140 comprise the first metal layer 110 and the second metal layer 120.

A width wₜ of the one or more trenches 140 may be measured between adjacent edges of the one or more trenches 140. Each edge of the adjacent edges being formed between an upper side of the second metal layer 120 (which may form a top layer of the one or more segments 170A-E) and the topmost part of the sidewall of the one or more trenches 140 (such as an edge formed within the second metal layer 120 between the upper side of second metal layer 120 and a sidewall of the second metal layer 120 that is part of the sidewall of the one or more trenches 140. As already discussed above and as further described in detail below the width wₜ of at least one of the one or more trenches 140 may be smaller than 3µm. Reducing the width between segments 170A-E (such as reducing the width wₜ of the one or more trenches 140) may enhance miniaturization of the ion trap device 100. In addition or as an alternative, by reducing the width wₜ of the at least one of the one or more trenches 140 may ensure that a higher percentage of the area of the ion trap device 100, 200 may be covered with the second metal layer 120 such that a percentage of the area of the ion trap device 100, 200 where substrate 130 and/or dielectric layer 270A is exposed may be decreased. This may ensure that the one or more ions are better shielded against the substrate 130 and/or dielectric layer 270A on which stray charges may accumulate which may cause heating of the one or more ions (which in turn may decrease fidelity rate of gate operations).

One or more segments 170A-170E may comprise a part of the first metal layer 110 and a part of the second metal layer 120. For example, the one or more segments 170A-E may comprise at least one of a direct-current (DC) electrode of ion trap device 100, a radio-frequency (RF) electrode of ion trap device 100 and a ground electrode of ion trap device 100. The one or more segments 170A-E are configured to trap one or more ions at a position vertically above the one or more segments 170A-E. The one or more segments 170A-E may be electrically connected to one or more signal generators (e.g., via wire-bonds; not shown). At least one of the one or more segments 170A-E may comprise a width wₛ that is equal to or smaller than 3 µm. Reducing the width wₛ of the one or more segments 170A-E (such as reducing the width wₜ of the one or more trenches 140) may allow a more stable control of the one or more ions trapped by the one or more segments 170A-E E.g., the voltage pulses applied for moving the one or more ions can be distributed among more segments 170A-E and/or the one or more ions are less exposed to substrate 130 or dielectric layer 270A which can cause unwanted heating due to stray charges that can be accumulated on substrate 130 and on dielectric layer 270A.

Substrate 130 may have an upper surface on which the one or more segments 170A-E are arranged. Surface of substrate 130 may be substantially planar. In embodiments, the substrate 130 may comprise one or more of semiconductor material (such as Si, SiC and GaN or similar materials), fused silica, quartz glass, and sapphire. The substrate 130 may have a thickness of 400µm to 1mm (such as 725µm or 750µm for example).

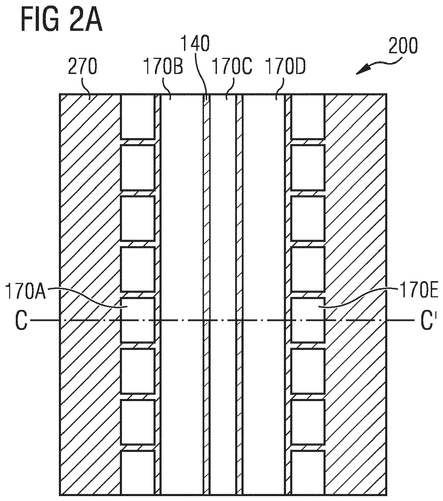

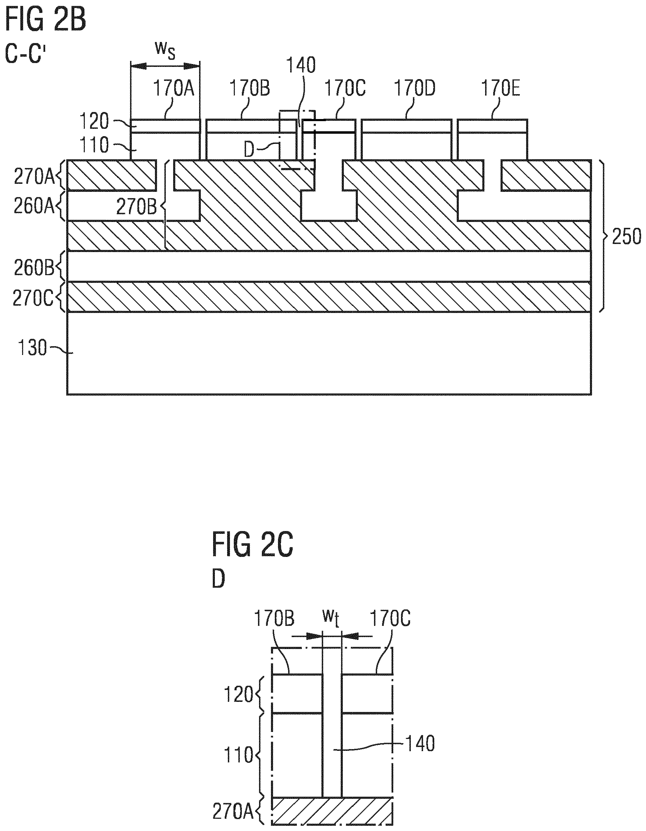

Referring now to Fig. 2A illustrating a top view of a device 200 for trapping ions according to one or more embodiments of the present disclosure, to Fig. 2B illustrating a cross section (such as along the line indicated with C-C' in Fig. 2A) of a device 200 for trapping ions according to one or more embodiments of the present disclosure, and to Fig. 2C illustrating an enlarged view of a cross section (such as the region D indicated with dashed lines in Fig. 2B) of a device 200 for trapping ions illustrating a trench 140 having a width wₜ according to one or more embodiments of the present disclosure.

The device 200 comprises the same or similar elements as already discussed above with regard to device 100 with regard to Figs. 1A-1C (such as first metal layer 110, second metal layer 120, substrate 130, one or more trenches 140, and one or more segments 170A-E. In addition to that, device 200 comprises a multi-layer structure 250 that is arranged between substrate 130 and first metal layer 110. Multi-layer structure 250 is arranged over the substrate 130. Multi-layer structure 250 comprises one or more electrically conductive layers 260A-B and one or more dielectric layers 270A-C. In embodiments, some of the one or more electrically conductive layers 260A-B may be electrically connected to the one or more segments 170A-E and may be used to provide electrical signals to respective ones of the one or more segments 170A-E. For example, an upper one of the conductive layers 260A-B may be structured to define one or more electrical connections that are connected to the one or more segments 170A-E with electrical vias that may extend from the upper one of the conductive layers 260A-B through the upper one of dielectric layers 270A-270C to the one or more segments 170A-E. This may allow routing of signals to the one or more segments 170A-E.

According to embodiments, an upper layer 270A of the multi-layer structure 250 may be one of the one or more dielectric layers 270A-C. In the embodiment shown in Fig. 2A-2C a bottom of the one or more trenches 140 is formed by the upper layer 270A of the multi-layer structure 250. In some embodiments, one of the one or more conductive layers 260A-B may be a continuous shielding layer for shielding electro-magnetic fields from substrate 130. In the embodiment shown in Fig. 2A-C the multi-layer structure comprises two conductive layers 260A-B and three dielectric layers 270A-C, however more or less metal layers and dielectric layers are also possible and encompassed by the present disclosure. In some examples, conductive layers 260A-B are made of a material that is the same as the material of the first metal layer 110. Dielectric layers 270A-C may be made of a material that comprises an oxide (such as silicon oxide). In examples, the one or more dielectric layers 270A-C may have a thickness in a range between 0.5µm and 10µm or between 1µm and 3µm (such as 1.3µm or 2.2µm, for example) in a vertical direction that is orthogonal to a first major surface of the substrate 130. Each one of the one or more dielectric layers 270A-C may have a same thickness or can have a thickness that differs from other ones of the one or more dielectric layers 270A-C depending on circumstances. The one or more conductive layers 260A-B may have a thickness in a range between 0.5µm and 10µm or between1µm and 3µm (such as 2µm, for example) in a vertical direction that is orthogonal to a first major surface of the substrate 130. Each one of the one or more conductive layers 260A-B may have a same thickness or can have a thickness that differs from other ones of the one or more conductive layers 260A-B depending on circumstances.

Referring now to Figs. 3A-3E and Fig. 4. Figs. 3A-3E illustrate several steps of an embodiment of manufacturing a device 100, 200 for trapping ions, such as the ones illustrated in Figs. 1A-1C and Figs. 2A-2C. Fig. 3F illustrates an enlarged view of a part of a cross section of a device 100, 200 for trapping ions illustrating a trench 400 having a width wₜ according to one or more embodiments of the present disclosure. FIG. 4 illustrates a flow chart of an embodiment of a method 400 for manufacturing a device 100, 200 for trapping ions according to embodiments of the present disclosure, such as the ones illustrated in Figs. 1A-1C, and 2A-2C and as illustrated in Figs. 3A-3F. Like reference numerals in Figs. 3A-3F as in Figs. 1A-1C and 2A-2C refer to similar or identical elements and will not be re-explained here but reference is made to the passages above, where these elements are described in conjunction with Figs. 1A-1C and 2A-2C.

Referring to Fig. 3A and Fig. 4, a method 400 for fabricating a device 100, 200 for trapping ions may comprise forming 410 a first metal layer 110 over a substrate 130. The first metal layer 110 is made of a first material (such as at least one of Al, Cu, Ti, Ti, W, Ti, AlCu, AlSiCu, TiN, and TiW. As can be seen in Fig. 3A, multi-layer structure 250 may be arranged between substrate 130 and first metal layer 110 (e.g., as illustrated in Fig. 2). Alternatively, multi-layer structure 250 may not be present (e.g., as illustrated in Fig. 1). Forming 410 the first metal layer 110 over substrate 130 may include using any suitable technique such as sputtering, evaporation, chemical vapor deposition, electroplating, atomic layer deposition or epitaxy, for example. First metal layer 110 may have a thickness in a range between 1µm and 10µm (such as 2µm, for example) in a vertical direction that is orthogonal to a first major surface of the substrate 130. As discussed above, one or more first intervening layers may be present between the multi-layer structure 250 and first metal layer 110 (in case the multi-layer structure 250 is present) or between the substrate 130 and the first metal layer 110 (in case the multi-layer structure 250 is not present). The one or more first intervening layers may include a first barrier layer and/or a first adhesion layer. Forming 410 the first metal layer 110 over the multi-layer structure 250 may further include forming an electrical contact between the first metal layer 110 and the one or more electrically conductive layers 260A-B of the multi-layer structure 250 (e.g., by forming electrical vias between an upper conductive layer and the first metal layer 110 through a top dielectric layer 270A of multi-layer structure 250).

Referring to Fig. 3B and Fig. 4, a method 400 for fabricating a device 100, 200 for trapping ions may further comprise forming 420 a second metal layer 120 over the first metal layer 110, The second metal layer 120 is made of a second material being different from the first material (e.g., the second material may comprise at least one of Ni, Au, Pt, Pd, Ru, Rh, Pd, Ag, Os, and Ir). Forming 420 the second metal layer 120 over the first metal layer 110 may include using atomic layer deposition, sputtering, evaporation or the like. Second metal layer 120 may have a thickness that is in a range between 15nm and 750 nm or between 20nm and 500nm (such as 200nm, for example). As discussed above, one or more second intervening layers may be present between the first metal layer 110 and the second metal layer 120. The one or more intervening layers may include a second barrier layer and/or a second adhesion layer. In some embodiments, forming 410 the first metal layer 110 and forming 420 the second metal layer 120 is performed under a vacuum pressure and without a breach of the vacuum pressure in between the two steps. This may avoid formation of an oxide in between the first metal layer 110 and the second metal layer 120. However, other intervening layers may be present, as discussed above.

Referring to Fig. 3C, method 400 for fabricating a device 100, 200 for trapping ions may further comprise forming an etch mask 310 over the second metal layer 120. Etch mask 310 may comprise one or more openings 320A-B. The one or more openings 320A-B may define one or more respective positions on the second metal layer 120 where one or more first trenches 140A are to be etched in the second metal layer 120 when performing physical dry etching 430 in a subsequent step. Forming etch mask 310 can include performing spin-coating to form a resist with a typical thickness between 1 µm and 6 µm or forming a hard mask with a typical thickness between 0.1µm and 2µm, for example Etch mask 310 may be structured using one or more suitable techniques (such as photolithography, electron beam litography or reactive ion etching) to form the one or more openings 320A-B. The one or more openings 320A-B in etch mask 310 may have a width wₑ that is equal to or smaller than 3µm

Referring to Fig. 3E and Fig. 4, method 400 for fabricating a device 100, 200 for trapping ions may further comprise performing physical dry etching 430 to form one or more first trenches 140A in the second metal layer 120. The one or more first trenches 140A may extend from an upper side 340A of the second metal layer 120 to a lower side 340B of the second metal layer 120. In some examples, performing physical dry etching 430 may be stopped when one of the one or more second intervening layers is reached (if they are present) or may be stopped when the first metal layer 110 is reached. In other examples, the physical dry etching may be continued in the first metal layer 110 for a short period of time and stopped once a certain depth in the first metal layer 110 is etched by the physical dry etching, the certain depth being comparably small as compared to the thickness of the first metal layer 110 (such as 10 times smaller, 100 times smaller or 1,000 times smaller). Physical dry etching 430 may comprise (such as be) ion beam etching. Ion beam etching may include targeting a beam of positively charged ions (such as Ar⁺) on the second metal layer 120. This may cause the charged ions to transfer their kinetic energy to the atoms of the second metal layer 120 and thereby separate the atoms from the surface of the second metal layer 120.

Referring to Fig. 3F and Fig. 4, method 400 for fabricating a device 100, 200 for trapping ions may further comprise performing chemical dry etching 440 to form one or more second trenches 140B in the first metal layer 110 below the one or more first trenches 140A. The one or more second trenches 140B may extend to a lower side 330B of the first metal layer 110. When performing the chemical dry etching 440 the second metal layer 120 may be used as a hard mask. In other words, the one or more first trenches 140A in the second metal layer 120 may define the positions of the one or more second trenches 140B that are formed in by the chemical dry etching. The second metal layer 120 may be substantially inert with respect to the chemical dry etching. The chemical dry etching may reach the first metal layer 110 through the one or more first openings 140A formed in the second metal layer 120. Chemical dry etching 440 may comprise (such as be) plasma etching (such as reactive ion etching ). Reactive ion etching, for example, may include accelerating an etchant towards the first metal layer 110 (e.g. to increase efficiency). In some examples, a polymer layer may be arranged on sidewalls of the one or more first trenches 140A and/or the one or more second trenches 140B during the chemical dry etching 440 in order to increase the directiveness of the etching process.

Performing the chemical dry etching 440 may be stopped once the upper layer of multi-layer structure 250 (such as dielectric layer 270A) is reached (if multi-layer structure 250 is present) or once substrate 130 is reached (if multi-layer structure 250 is not present). After the chemical dry etching step the one or more first trenches 140A in the second metal layer 120 (formed by performing physical dry etching 430) and the one or more second trenches 140B (formed by performing chemical dry etching 440) are laterally aligned and form respective one or more common trenches 140. The one or more common trenches 140 may extend from an upper side 340A of the second metal layer 120 to the lower side 330B of the first metal layer 110. The one or more common trenches 140 may separate the first metal layer 110 and the second metal layer 120 into one or more segments 170A-E, as discussed in detail further above.

Referring now to Fig. 3F which illustrates an enlarged view of a part of a cross section (such as region E shown in Fig. 3E) of a device 100, 200 for trapping ions illustrating a trench 140 having a width wₜ according to one or more embodiments of the present disclosure. Trench 140 as shown in Fig. 3F is similar to trench 140 as shown in Figs. 1C and 2C and additionally illustrates that the sidewalls of trench 140 may be tilted with respect to a vertical direction z (the vertical direction z being orthogonal to a first major surface of substrate 130). The tilting may be due to the etching steps 430 and 440 performed for forming the one or more trenches 140. According to embodiments the one or more trenches 140 comprise a first sidewall comprising a first sidewall section 351A arranged adjacent to the first metal layer 110 and a second sidewall section 351B arranged adjacent the second metal layer 120. The first sidewall section 351A may be tilted with a first angle α with respect to the vertical direction z, and the second sidewall section 351B may be tilted with a second angle β with respect to the vertical direction. Similarly, the one or more trenches 140 comprise a second sidewall comprising a first sidewall section 352A arranged adjacent to the first metal layer 110 and a second sidewall section 352B arranged adjacent the second metal layer 120. The first sidewall section 352A may be tilted with a first angle α with respect to the vertical direction z, and the second sidewall section 352B may be tilted with a second angle β with respect to the vertical direction. The first angle α may be smaller than the second angle β. This may be due to the fact that performing the chemical dry etching 440 in the first metal layer 110 may be more directed (such as more anisotropic) than the physical dry etching 430 in the second metal layer 120. Typical values for the first angle α and the second angle β are 1° < α < 5° and 5° < β < 30°. However, other values for α and β are possible and contemplated by the present disclosure.

As discussed above, a width wₜ of the one or more trenches 140 may be measured between adjacent edges of the one or more trenches 140. Each edge of the adjacent edges being formed between an upper side 340A of the second metal layer 120 (which may form a top layer of the one or more segments 170A-E) and the topmost part of the sidewall of the one or more trenches 140 (such as an edge formed within the second metal layer 120 between the upper side 340A of second metal layer 120 and second sidewall section 351B of second metal layer 120 and an edge formed within the second metal layer 120 between the upper side 340A of second metal layer 120 and second sidewall section 352B of second metal layer 120).

A width at a bottom of trench 140 may be given by wₜ - 2 · (tan α · t₁ + tan β · t₂). Here, t₁ denotes the thickness of the first metal layer 110 and t₂ denotes the thickness of the second metal layer. As discussed further above, the methods described in the present disclosure may allow that the width wₜ of the one or more trenches 140 can be less than 3µm. Typical values for a width at a bottom of trench 140 are 500 nm to 2.75 µm, for example.

Terms such as "first", "second", and the like, are used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

It is to be understood that the features of the various embodiments described herein may be combined with each other, unless specifically noted otherwise.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following lists a set of examples that are useful for understanding the present disclosure:
Example 1: A method for fabricating a device for trapping ions, the method comprising: forming a first metal layer over a substrate, the first metal layer being made of a first material; forming a second metal layer over the first metal layer, the second metal layer being made of a second material being different from the first material; performing physical dry etching to form one or more first trenches in the second metal layer, the one or more first trenches extending to a lower side of the second metal layer; and performing chemical dry etching to form one or more second trenches in the first metal layer below the one or more first trenches, the one or more second trenches extending to a lower side of the first metal layer.
Example 2: The method of example 1, wherein the one or more first trenches and the one or more second trenches are laterally aligned and form one or more common trenches, the one or more common trenches extending from an upper side of the second metal layer to the lower side of the first metal layer.
Example 3: The method of example 2, wherein at least one of the one or more common trenches has a width that is equal to or smaller than 3 µm.
Example 4: The method of example 2 or 3, wherein the one or more common trenches separate the first metal layer and the second metal layer into one or more segments, wherein each one of the one or more segments comprises a part of the first metal layer and a part of the second metal layer.
Example 5: The method of example 4, wherein the one or more segments are configured to trap one or more ions at a position above the one or more segments.
Example 6: The method of example 4 or 5, wherein at least one of the one or more segments comprises a width that is equal to or smaller than 3 µm.
Example 7: The method of any of examples 1 to 6, wherein the method further comprises: after forming the second metal layer and before performing physical dry etching, forming an etch mask over the second metal layer, wherein the etch mask comprises one or more openings, and wherein the one or more openings define one or more respective positions on the second metal layer where the one or more first trenches are to be etched when performing the physical dry etching.
Example 8: The method of any of examples 1 to 7, wherein a multi-layer structure is arranged over the substrate, wherein the multi-layer structure comprises one or more electrically conductive layers and one or more dielectric layers.
Example 9: The method of example 8, wherein forming the first metal layer over the substrate comprises: forming the first metal layer over the multi-layer structure, and forming an electrical contact between the first metal layer and the one or more electrically conductive layers of the multi-layer structure.
Example 10: The method of examples 8 or 9, wherein performing the chemical dry etching comprises stopping the chemical dry etching when the one or more second trenches extend to an upper dielectric layer of the one or more dielectric layers.
Example 11: The method of any one of examples 1 to 10, wherein the first metal layer comprises at least one of Al, Cu, AlCu, AlSiCu, and wherein the second metal layer comprises at least one of Ni, Au, Pt, Pd, Ru, Rh, Pd, Ag, Os, and Ir.
Example 12: The method of example 11, wherein the second metal layer comprises at least one of Au, Pt, and Pd.
Example 13: The method of any of examples 1 to 12, wherein forming the first metal layer and forming the second metal layer is performed under a vacuum pressure and without a breach of the vacuum pressure in between.
Example 14: The method of any of examples 1 to 13, wherein chemical dry etching comprises reactive-ion etching.
Example 15: A device for trapping ions, the device comprising: a plurality of electrode segments configured to trap one or more ions, the plurality of electrode segments each comprising at least a first metal layer and a second metal layer, and wherein the plurality of electrode segments are separated from each other by one or more trenches, wherein at least one of the one or more trenches has a width that is equal to or less than 3 µm.
Example 16: The device for trapping ions of example 15, wherein the first metal layer comprises at least one of Al, Cu, AlCu, and AlSiCu, and wherein the second metal layer comprises at least one of Ni, Au, Pt, Pd, Ru, Rh, Pd, Ag, Os, and Ir.
Example 17: The device for trapping ions of example 15 or 16 wherein at least one electrode segment of the plurality of electrode segments comprises a width that is equal to or smaller than 3µm.
Example 18: The device for trapping ions of any of examples 15 to 17, wherein the at least one of the one or more trenches comprises a first sidewall comprising a first sidewall section arranged adjacent the first metal layer and a second sidewall section arranged adjacent the second metal layer, and wherein the first sidewall section is tilted with a first angle with respect to a vertical direction, and wherein the second sidewall section is tilted with a second angle with respect to the vertical direction.

## Claims

1. A method (400) for fabricating a device for trapping ions(100), the method comprising:
forming (410) a first metal layer (110) over a substrate (130), the first metal layer (110) being made of a first material;
forming (420) a second metal layer (120) over the first metal layer (110), the second metal layer (120) being made of a second material being different from the first material;
performing physical dry etching (430) to form one or more first trenches (140A) in the second metal layer (120), the one or more first trenches (140A) extending to a lower side (340B) of the second metal layer (120); and
performing chemical dry etching (440) to form one or more second trenches (140B) in the first metal layer (110) below the one or more first trenches (140A), the one or more second trenches (140B) extending to a lower side (330B) of the first metal layer (110).

2. The method (400) of claim 1, wherein the one or more first trenches (140A) and the one or more second trenches (140B) are laterally aligned and form one or more common trenches (140), the one or more common trenches (140) extending from an upper side (340A) of the second metal layer (120) to the lower side (330B) of the first metal layer (110).

3. The method (400) of claim 2, wherein at least one of the one or more common trenches (140) has a width (wₜ) that is equal to or smaller than 3 µm.

4. The method of claim 2 or 3, wherein the one or more common trenches (140) separate the first metal layer (110) and the second metal layer (120) into one or more segments (170A, 170B, 170C, 170D, 170E), wherein each one of the one or more segments comprises a part of the first metal layer (110) and a part of the second metal layer (120).

5. The method of claim 4, wherein the one or more segments (170 A, 170B, 170C, 170D, 170E) are configured to trap one or more ions at a position above the one or more segments.

6. The method of claim 4 or 5, wherein at least one of the one or more segments (170 A, 170B, 170C, 170D, 170E) comprises a width (w_s) that is equal to or smaller than 3 µm.

7. The method (400) of any of claims 1 to 6, wherein the method further comprises:
after forming (420) the second metal layer (120) and before performing physical dry etching (430), forming an etch mask (310) over the second metal layer (120), wherein the etch mask (310) comprises one or more openings (320A, 320B), and wherein the one or more openings (320A, 320B) define one or more respective positions on the second metal layer (120) where the one or more first trenches (140A) are to be etched when performing the physical dry etching (430).

8. The method (400) of any of claims 1 to 7, wherein a multi-layer structure (250) is arranged over the substrate (130), wherein the multi-layer structure (250) comprises one or more electrically conductive layers (260A, 260B) and one or more dielectric layers (270A, 270B, 270C).

9. The method of claim 8, wherein forming (410) the first metal layer (110) over the substrate (130) comprises:
forming the first metal layer (110) over the multi-layer structure (250), and
forming an electrical contact between the first metal layer (110) and the one or more electrically conductive layers (260A, 260B) of the multi-layer structure (250; 350).

10. The method of claim 8 or 9, wherein performing the chemical dry etching (440) comprises stopping the chemical dry etching (440) when the one or more second trenches (140B) extend to an upper dielectric layer (270A) of the one or more dielectric layers (270A; 270B; 270C).

11. The method (400) of any one of claims 1 to 10,
wherein the first metal layer comprises at least one of Al, Cu, AlCu, and AlSiCu, and
wherein the second metal layer comprises at least one of Ni, Au, Pt, Pd, Ru, Rh, Pd, Ag, Os, and Ir.

12. The method of any of claims 1 to 11, wherein forming the first metal layer and forming the second metal layer is performed under a vacuum pressure and without a breach of the vacuum pressure in between.

13. The method of any of claims 1 to 12, wherein chemical dry etching (440) comprises reactive-ion etching.

14. A device (100; 200) for trapping ions, the device comprising:
a plurality of electrode segments (170A, 170B, 170C, 170D, 170E) configured to trap one or more ions,
the plurality of electrode segments each comprising at least a first metal layer (110) and a second metal layer (120), and
wherein the plurality of electrode segments are separated from each other by one or more trenches (140),
wherein at least one of the one or more trenches (140) has a width (wt) that is equal to or less than 3 µm.

15. The device (100; 200) for trapping ions of claim 14,
wherein the first metal layer (110) comprises at least one of Al, Cu, AlCu, and AlSiCu, and
wherein the second metal layer (120) comprises at least one of Ni, Au, Pt, Pd, Ru, Rh, Pd, Ag, Os, and Ir; and/or,
wherein at least one electrode segment of the plurality of electrode segments (170A, 170B, 170C, 170D, 170E) comprises a width (wₛ) that is equal to or smaller than 3µm; and/or
wherein the at least one of the one or more trenches (140) comprises a first sidewall comprising a first sidewall section (351A) arranged adjacent the first metal layer (110) and a second sidewall section (351B) arranged adjacent the second metal layer (120), and wherein the first sidewall section (351A) is tilted with a first angle (α) with respect to a vertical direction (z), and wherein the second sidewall section (351B) is tilted with a second angle (β) with respect to the vertical direction.

## Amended claims

### Amended claims in accordance with Rule 137(2) EPC.

1. A method (400) for fabricating a device for trapping ions(100), the method comprising:
forming (410) a first metal layer (110) over a substrate (130), the first metal layer (110) being made of a first material;
forming (420) a second metal layer (120) over the first metal layer (110), the second metal layer (120) being made of a second material being different from the first material;
performing physical dry etching (430) to form one or more first trenches (140A) in the second metal layer (120), the one or more first trenches (140A) extending to a lower side (340B) of the second metal layer (120); and
performing chemical dry etching (440) to form one or more second trenches (140B) in the first metal layer (110) below the one or more first trenches (140A), the one or more second trenches (140B) extending to a lower side (330B) of the first metal layer (110),
**characterized in that**,
the second metal layer (120) forms a top material for an electrode segment of an ion trap.

2. The method (400) of claim 1, wherein the one or more first trenches (140A) and the one or more second trenches (140B) are laterally aligned and form one or more common trenches (140), the one or more common trenches (140) extending from an upper side (340A) of the second metal layer (120) to the lower side (330B) of the first metal layer (110).

3. The method (400) of claim 2, wherein at least one of the one or more common trenches (140) has a width (wt) that is equal to or smaller than 3 µm.

4. The method of claim 2 or 3, wherein the one or more common trenches (140) separate the first metal layer (110) and the second metal layer (120) into one or more segments (170A, 170B, 170C, 170D, 170E), wherein each one of the one or more segments comprises a part of the first metal layer (110) and a part of the second metal layer (120).

5. The method of claim 4, wherein the one or more segments (170 A, 170B, 170C, 170D, 170E) are configured to trap one or more ions at a position above the one or more segments.

6. The method of claim 4 or 5, wherein at least one of the one or more segments (170 A, 170B, 170C, 170D, 170E) comprises a width (w_s) that is equal to or smaller than 3 µm.

7. The method (400) of any of claims 1 to 6, wherein the method further comprises:
after forming (420) the second metal layer (120) and before performing physical dry etching (430), forming an etch mask (310) over the second metal layer (120), wherein the etch mask (310) comprises one or more openings (320A, 320B), and wherein the one or more openings (320A, 320B) define one or more respective positions on the second metal layer (120) where the one or more first trenches (140A) are to be etched when performing the physical dry etching (430).

8. The method (400) of any of claims 1 to 7, wherein a multi-layer structure (250) is arranged over the substrate (130), wherein the multi-layer structure (250) comprises one or more electrically conductive layers (260A, 260B) and one or more dielectric layers (270A, 270B, 270C).

9. The method of claim 8, wherein forming (410) the first metal layer (110) over the substrate (130) comprises:
forming the first metal layer (110) over the multi-layer structure (250), and
forming an electrical contact between the first metal layer (110) and the one or more electrically conductive layers (260A, 260B) of the multi-layer structure (250; 350).

10. The method of claim 8 or 9, wherein performing the chemical dry etching (440) comprises stopping the chemical dry etching (440) when the one or more second trenches (140B) extend to an upper dielectric layer (270A) of the one or more dielectric layers (270A; 270B; 270C).

11. The method (400) of any one of claims 1 to 10,
wherein the first metal layer comprises at least one of Al, Cu, AlCu, and AlSiCu, and
wherein the second metal layer comprises at least one of Ni, Au, Pt, Pd, Ru, Rh, Pd, Ag, Os, and Ir.

12. The method of any of claims 1 to 11, wherein forming the first metal layer and forming the second metal layer is performed under a vacuum pressure and without a breach of the vacuum pressure in between.

13. The method of any of claims 1 to 12, wherein chemical dry etching (440) comprises reactive-ion etching.

14. A device (100; 200) for trapping ions, the device comprising:
a plurality of electrode segments (170A, 170B, 170C, 170D, 170E) configured to trap one or more ions,
the plurality of electrode segments each comprising at least a first metal layer (110) and a second metal layer (120), and
wherein the plurality of electrode segments are separated from each other by one or more trenches (140),
wherein at least one of the one or more trenches (140) has a width (wₜ) that is equal to or less than 3 µm
**characterized in that**,
the second metal layer (120) forms a top material for the electrode segments (170A, 170B, 170C, 170D, 170E).

15. The device (100; 200) for trapping ions of claim 14,
wherein the first metal layer (110) comprises at least one of Al, Cu, AlCu, and AlSiCu, and
wherein the second metal layer (120) comprises at least one of Ni, Au, Pt, Pd, Ru, Rh, Pd, Ag, Os, and Ir; and/or,
wherein at least one electrode segment of the plurality of electrode segments (170A, 170B, 170C, 170D, 170E) comprises a width (wₛ) that is equal to or smaller than 3µm; and/or
wherein the at least one of the one or more trenches (140) comprises a first sidewall comprising a first sidewall section (351A) arranged adjacent the first metal layer (110) and a second sidewall section (351B) arranged adjacent the second metal layer (120), and wherein the first sidewall section (351A) is tilted with a first angle (α) with respect to a vertical direction (z), and wherein the second sidewall section (351B) is tilted with a second angle (β) with respect to the vertical direction.
